# EUROPÄISCHE PATENTANMELDUNG

(11) **EP 0 740 990 A2**
(43) Veröffentlichungstag der Anmeldung: **06.11.1996**
(21) Anmeldenummer: 96106602.4
(22) Anmeldetag: 25.04.1996
(51) Int. Cl.: B29C 44/00, C08J 9/00

(54) **Verfahren zur Definition verschiedener Eigenschaften von zellulosehaltigen Schaumstoffen**

(30) Priorität: 02.05.1995 DE 19515594; 12.12.1995 DE 19546296; 12.12.1995 DE 19546295
(71) Anmelder: Schweitzer, Jacob, D-85591 Vaterstetten (DE); Vodermair, Hermann, D-85598 Baldham (DE); Schimmer-Wottrich, Renate, D-80805 München (DE)
(72) Erfinder: Brandauer, Edgar, Dr.-Ing., 06126 Halle (DE); Habelski, Norbert, Dr.-Ing., 06215 Luppenau/OT. Löpitz (DE); Löffler, Jana, Dipl.-Ing., 07426 Unterschöbling (DE); Ramhold, Frank, Dipl.-Ing., 06124 Halle (DE); Friedemann, Ingwalt, Dr.-Ing., 06118 Halle (DE)
(74) Vertreter: Kraft, Werner, Dipl.-Ing.(FH)

(57) **Zusammenfassung**

Die Erfindung betrifft ein Verfahren zur Definition verschiedener Eigenschaften von Schaumkörpern, die aufgeschlossene und/oder teilaufgeschlossene und/oder nichtaufgeschlossene zellulosehaltige Stoffe und gegebenenfalls Zusatzstoffe enthalten, und stellt Rezepturen für verfahrensgemäß hergestellte Schaumkörper vor.
Die zellulosehaltigen Ausgangsstoffe werden zunächst zu einem feuchten Brei weiterverarbeitet und nachfolgend einer Wärmebehandlung durch Mikrowellenbestrahlung unterzogen.
Die Eigenschaften der so hergestellten Schaumkörper werden durch Zumischen von bestimmten Stoffen vorbestimmt, die im Brei die Gasbildung verstärken, die die Haftbindung zwischen den Partikeln des Breis erhöhen oder die sich entweder unter dem Einfluß von Wärme oder von Feuchtigkeit vollständig oder teilweise in ein Gas umwandeln und somit das Aufschäumen unterstützen. Darüberhinaus können während des Herstellungsprozesses andere Rest- und Abfallstoffe zugesetzt werden, die auch silikatischer Natur sein können, vorzugsweise mit dem Ziel, diese sinnvoll wiederzuverwenden und gleichzeitig bestimmte Produkteigenschaften der Schaumkörper vorzubestimmen.

## Beschreibung

Die Erfindung betrifft ein Verfahren zur Definition verschiedener Eigenschaften von Schaumkörpern, die zellulosehaltige Stoffe enthalten und stellt Rezepturen für verfahrensgemäß hergestellte Schaumkörper vor.
Sie ist insbesondere für die Verarbeitung von Altpapier oder anderen aufgeschlossenen oder teilaufgeschlossenen zellulosehaltigen Materialien konzipiert worden.
Als Ausgangsstoffe sind gleichermaßen Papier, Pappe, oder andere Zellulose enthaltende Materialien geeignet. Diese können entweder sortenrein oder als Rohstoffgemisch eingesetzt werden.
Vorzugsweise soll die Erfindung einen Beitrag zum Umweltschutz durch Wiedergewinnung und Aufarbeitung von Sekundärrohstoffen, die im erheblichen Umfang zur Verfügung stehen, leisten.
Weiterhin bietet die Erfindung die Möglichkeit, im Bedarfsfall weitere Materialien in den Feststoffverband einzubinden, die ebenfalls zellulosehaltig sind, aber in unaufgeschlossener Form vorliegen. Darüberhinaus können auch nichtzellulosehaltige Rest- und Abfallstoffe beigegeben und somit einer sinnvollen Wiedervewendung zugeführt werden.
Durch das erfindungsgemäße Verfahren sind Schaumkörper herstellbar, die basierend auf den o.g. Ausgangsstoffen verschiedene Eigenschaften im Hinblick auf Festigkeit und Porosität bzw. Dichte besitzen.

Im Stand der Technik sind Schaumkörper auf der Basis von Altpapier enthalten. Bekanntermaßen wird das aufgeschlossene oder teilaufgeschlossene zellulosehaltige Ausgangsmaterial einem Quellprozesses unterzogen bzw. direkt in der anfallenden Form des Aufschlusses bzw. Teilaufschlusses eingesetzt und anschließend wärmebehandelt.
Infolge des Energieeintrages werden im Papierbrei durch den abströmenden Dampf Strömungswege in Form von Hohlräumen geschaffen. Der Körper bläht auf und nimmt eine poröse Struktur an. Sein Körpervolumen vergrößert sich.

Beigegebene Reaktionshelfer sollen den Prozeß der Volumenvergrößerung unterstützen. Da in diesem Stadium gleichzeitig der Härtungsprozeß infolge Trocknung des Materials einsetzt, bleibt die voluminöse poröse Struktur zumindest teilweise erhalten.
Aufgabe der Erfindung ist es nun, den beschriebenen Prozeß dahingehend zu beeinflussen, daß Schaumkörper mit vorbestimmter Festigkeit und Porosität herstellbar werden.
In besonderer Weise soll das innerhalb eines Verfahrens erfolgen, bei dem die benötigte Wärmeenergie durch Mikrowellenstrahlung in das wässrige zellulosehaltige Ausgangsmaterial eingebracht wird. Ein solches Verfahren ist in der DE- OS 44 04 322 ausführlich beschrieben.
Erfindungsgemäß werden den Grundstoffen aus aufgeschlossenen bzw. teilaufgeschlossenen zellulosehaltigen Material, Wasser und weitere Stoffe in bestimmten Dosierungen und zu bestimmten Zeitpunkten hinzugefügt.
Es handelt sich hierbei um Stoffe, die die Gasbildung im Brei verstärken (Schäumungsmittel), die die Haftbindung zwischen den Partikeln des Breis erhöhen (Stabilisierungsmittel), die sich entweder unter dem Einfluß von Wärme oder von Feuchtigkeit vollständig oder teilweise in ein Gas umwandeln und somit das Aufschäumen unterstützen (Treibmittel) und die den pH- Wert der Mischung beeinflussen.
Weiterhin können nichtaufgeschlossene zellulosehaltige Stoffe und/oder Rest- und Abfallstoffe als Zuschlagstoffe eingesetzt werden. Versuche haben gezeigt, daß sich auch silikatische Materialien, beispielsweise Fräsmehl aus Porenbeton, gut als Zuschlagstoffe eignen.
Dabei ist es nicht erforderlich, daß alle genannten Stoffgruppen Bestandteil jeder Rezeptur sind. Auch der gleichzeitige Einsatz von verschiedenartigen Vertretern der jeweiligen Stoffgruppen ist möglich.

Gegenstand der Erfindung ist die Art der Kombination von Schäumungsmitteln, Stabilisierungsmitteln, Treibmitteln und Zuschlagstoffen zur Erzielung unterschiedlichster Produkteigenschaften der unter Mikrowellenstrahlung erzeugten Schaumkörper und gegebenenfalls die Zugabe der o.g. Zuschlagstoffe innerhalb eines intensiven Mischprozesses.
Die Zugabe der nichtaufgeschlossenen zellulosehaltigen Stoffe und/oder der Rest- und Abfallstoffe, wie auch der silikatischen Materialien, wird mit der Maßgabe vorgenommen, die Eigenschaften der zu erzeugenden Schaumkörper in eine bestimmte Richtung zu entwickeln und/oder die Zusatzstoffe der Entsorgung zu entziehen und sinnvoll wiederzuverwerten.
Die Einsatzmengen jeder genannten Stoffgruppe sind je nach gewünschter Produkteigenschaft variierbar. Insbesondere das gegensätzliche Wirken von Schäumungs- und Stabilisierungsmitteln beeinflussen die Festigkeit und Porosität der Schaumkörper.
Der beschriebene Basisprozeß wird durch Zusatz von verschiedenen den genannten Stoffgruppen angehörenden Stoffen wie auch durch die oben beschriebenen Zusatzstoffe verstärkt oder abgeschwächt.
Verfahrensseitig sind Zeitpunkt und Dosierung der Zusätze erfindungswesentlich.

Als Schäumungsmittel werden vorteilhaft Tenside eingesetzt. Diese bewirken, daß die Gasentwicklung bei der Reaktion des Treibmittels effektiv zur Schaumbildung nutzbar gemacht werden kann. Das Gas und das Tensid in der wässrigen Phase des zellulosehaltigen Breis bilden temporäre Schaumblasen, die ein Verweilen des Gases im Körper bis zu dessen Stabilisierung bewirken.
Tenside werden in einer Dosierung von 0 bis 5,0 Masse- %, bezogen auf das absolut trockene zellulosehaltige Ausgangsmaterial, eingesetzt.
Die Zumischung dieser Komponente kann sowohl gleichzeitig mit dem Wasser für die Zellstoffquellung als auch nach diesem Verfahrensschritt erfolgen.

Treibmittel, wie beispielsweise Hirschhornsalz, Backpulver, Natron oder Soda, bewirken infolge der Gasentwicklung bei ihrer chemischen Umsetzung, entweder mit oder ohne Wärmeeinwirkung, im Zusammenwirken mit dem Schäumungsmittel ein Aufblähen der wässrigen Zellstoffmasse.
Treibmittel werden in einer Dosierung von 0 bis 200 Masse- %, bezogen auf das absolut trockene zellulosehaltige Ausgangsmaterial, eingesetzt. Solche Treibmittel, die sich nicht rückstandsfrei in ein Gas umwandeln, hinterlassen in der ausgehärteten Zellstoffmasse einen festen Rückstand, der strukturbildend ist und damit die Festigkeit der erzeugten Schaumkörper erhöht.
Die Zumischung von Treibmitteln, die ihre Wirkung bereits ohne Wärmeeinfluß entfalten, erfolgt unmittelbar vor dem Einfüllen des zellulosehaltigen Materials in Formen. Treibmittel, die unter Wärmeeinfluß wirken, können mit dem Stabilisierungsmittel gemeinsam zugegeben werden.

Als Stabilisierungsmittel können beispielsweise Latex, Gips, Anhydrit, Eiweis Stärke oder Mehl aus Körnerfrüchten verwendet werden.
Stark wirkende Stabilisierungsmittel erhöhen die Bindungskräfte zwischen den Partikeln des zellulosehaltigen Breis und bremsen so den durch das Schäumungs- und Treibmittel im Zusammenwirken mit der Mikrowellenstrahlung hervorgerufenen Aufblähvorgang der wässrigen Zellstoffmasse.
Ein schwach wirkendes Stabilisierungsmittel hingegen bremst den Aufblähvorgang nur wenig, was zu voluminösen und porösen Schaumkörpern mit geringer Festigkeit führt. Stoffe aus der Gruppe der Stabilisierungsmittel werden in einer Dosierung von 0 bis 200 Masse- %, bezogen aufdas absolut trockene zellulosehaltige Ausgangsmaterial, eingesetzt. Die Zumischung dieser Produkte kann sowohl während des Quellprozesses des zellulosehaltigen Materials als auch in einem nachfolgenden Mischprozeß vorgenommen werden.

Den pH- Wert beeinflussende Mittel werden in solcher Menge zugegeben, daß der gewünschte pH- Wert der wässrigen Mischung im Bereich zwischen 3 und 12 liegt.

Als nichtaufgeschlossene Materialien bieten sich insbesondere Naturprodukte wie Holz oder Schilf und Produkte aus der landwirtschaftlichen Produktion an, wie beispielsweise Stroh, Heu, Flachs oder Hanf. Rest- und Abfallstoffe können entweder natürlichen Ursprungs sein oder bei den verschiedensten Produktionsprozessen anfallen. Sie müssen sich dadurch auszeichnen, daß sie für den jeweiligen Einsatzzweck der Schaumkörper, zum Beispiel als Verpackungsmaterial, Wärme- oder Schalldämmung oder fuhr den Einsatz in einem weiterverarbeitenden Prozeß, geeignet sind. Solche Stoffe können sein: Viskosefasern, Glas- oder Mineralfasern, Kunstfasern, Aktivkohle oder Schaumpolystyrol.
Die Feststoffpartikeln aus den o.g. Materialien werden während der Wärmebehandlung gleichmäßig in die beim Aufschäumen entstehende Feststoffmatrix aus zellulosehaltigen Material eingebunden. Voraussetzung ist, daß die Zusatzstoffe intensiv mit den übrigen Bestandteilen vermischt worden sind. Gegebenenfalls ist eine Vorzerkleinerung erforderlich. In Abhängigkeit von den Mengen der anderen Inhaltsstoffe der Ausgangsmischung, beispielsweise zellulosehaltiges Material, Bindemittel und Treibmittel, werden die nichtaufgeschlossenen zellulosehaltigen Materialien und/oder die Rest- und Abfallstoffe in einer Dosierung von 0 bis 200 Masse- %, bezogen auf das absolut trockene zellulosehaltige Ausgangsmaterial, zugefügt. Der Zeitpunkt der Zugabe ist dabei von untergeordneter Bedeutung.
Zur Erzeugung hochporöser Schaumkörper ist die Rezepturmischung dadurch gekennzeichnet, daß entweder auf ein Stabilisierungsmittel verzichtet wird oder ein solches Zusammenwirken der eingesetzten Stoffe jeder genannten Stoffgruppe erfolgt, daß die Verfestigung zum Zeitpunkt der maximalen Aufschäumung infolge der Treibmittel- und Mikrowellenwirkung eintritt.

Sollen feste Schaumkörper erzeugt werden, so ist die Rezepturmischung dadurch charakterisiert, daß entweder auf Treib- und Schäumungsmittel gänzlich verzichtet wird oder die Wirkung von Treib- und Schäumungsmittel in Kombination mit der Mikrowellenstrahlung durch das Stabilisierungsmittel so stark gebremst wird, daß ein Körper mit festem Gefüge und kleinen Poren entsteht.

Durch die Zugabe von nichtaufgeschlossenen zellulosehaltigen Materialien und/oder von Rest- und Abfallstoffen, die auch silikatischer Natur sein können, sind bestimmte Eigenschaften gezielt herausarbeitbar, insbesondere durch Auswahl und Einsatzmenge der Zuschlagstoffe. Ist der Anteil an Zusatzstoffen gering, so entsteht ein Schaumkörper mit nur gering geänderten Eigenschaften gegenüber einem nach dem Grundrezept hergestellten Schaumkörper. Mit steigendem Gehalt an Zusatzstoffen in der Produktmischung lassen sich bestimmte Eigenschaften wie z. B. Dichte, Wärmeleitfähigkeit oder Festigkeit verändern.

Wie bereits ausgeführt, können auch silikatische Materialien als Zusatzstoffe eingesetzt werden. Innerhalb eines intensiven Mischprozesses werden diese in feinkörnig gemahlener Form dem Brei aus zellulosehaltigem Material, Wasser und den Vertretern der genannten Stoffgruppen zugefügt.
In Abhängigkeit von den Mengen der anderen Inhaltsstoffe der Ausgangsmischung, beispielsweise zellulosehaltiges Material, Bindemittel und Treibmittel, ist eine Zudosierung von feinkörnig zerkleinertem silikatischen Material von 0 bis 200 Masse- %, bezogen auf das absolut trockene zellulosehaltige Ausgangsmaterial, sinnvoll.
Der Zeitpunkt der Zugabe ist dabei von untergeordneter Bedeutung. Als silikatische Zuschlagstoffe bieten sich insbesondere Produkte aus der Baustoftindustrie an. Versuche haben gezeigt, daß Fräsmehl, welches beim Zertrennen von Blöcken aus Porenbeton anfällt, vorteilhaft einsetzbar ist.

Die Feststoffpartikeln aus silikatischem Material werden während der Wärmebehandlung gleichmäßig in die beim Aufschäumen entstehende Feststoffmatrix aus zellulosehaltigem Material eingebunden. Voraussetzung ist, daß das silikatische Material intensiv mit den übrigen Bestandteilen vermischt worden ist.
Durch die Zugabe von silikatischem Material sind insbesondere die Festigkeitseigenschaften der zu erzeugenden Schaumkörper beeinflußbar.
Ist der Anteil gering, so entsteht ein Schaumkörper mit nur gering geänderten Eigenschaften gegenüber einem nach dem Grundrezept hergestellten Schaumkörper. Mit steigendem Gehalt an silikatischem Material in der Produktmischung nimmt die Porosität der Schaumkörper ab und die Festigkeit und Dichte erhöht sich.

Bekanntermaßen können weitere Eigenschaften der Schaumkörper, wie Flammenhemmung, Hydrophobie oder Resistenz gegen Bakterien, durch entsprechende weitere Zusätze eingestellt werden.

Bei allen Rezepturen wird Wasser nach Bedarf zugegeben. Der Wassergehalt in der Ausgangsmischung sollte zwischen 40-90 % betragen.

Aus der möglichen Vielzahl von Rezepturmischungen seien nachfolgend vier Beispiele aufgeführt, die in Laborversuchen zu guten Ergebnissen geführt haben.

Für einen Schaumkörper mit guter Festigkeit, einer gewissen Elastizität und geringer Dichte ist die folgende Rezepturmischung geeignet:

| | |
|---|---|
| - zellulosehaltige Masse (trocken) | 34,5 % |
| - Tensid | 0,6 % |
| - Bindemittel (Eiweiß) | 28,7 % |
| - Bindemittel (Latex) | 31,6 % |
| - Treibmittel (Backpulver) | 4,6 % |

Eine Rezeptur, bestehend aus:

| | |
|---|---|
| - zellulosehaltige Masse (trocken) | 28,3 % |
| - Tensid | 0,8 % |
| - Bindemittel (Eiweiß) | 23,6 % |
| - Treibmittel (Natron) | 47,3 % |

führt zu einem Schaumkörper mit geringer Festigkeit und geringer Dichte.

Ein Schaumkörper, der nichtaufgeschlossene zellulosehaltige Materialien enthält ist wie folgt zusammengesetzt:

| | |
|---|---|
| - aufgeschlossene zellulosehaltige Masse (trocken) | 41,0 % |
| -nichtaufgeschlossene zellulosehaltige Masse (trocken) | 41,0 % |
| -Tensid | 1,1 % |
| -Bindemittel (Soja) | 8,3 % |
| - Treibmittel (Natron) | 8,6 % |

Schließlich wird eine Rezeptur, die silikatisches Material enthält, angegeben:

| | |
|---|---|
| - zellulosehaltige Masse (trocken) | 40,5 % |
| - Tensid | 2,4 % |
| - Bindemittel (Soja) | 11,9 % |
| - Treibmittel (Natron) | 4,7 % |
| - Porenbeton- Fräsmehl | 40,5 % |

Auch bei den oben angegebenen Rezepturen wird Wasser nach Bedarf zugegeben. Der Wassergehalt in den jeweiligen Ausgangsmischungen liegt zwischen 40- 90 %, idealerweise bei 70%.

## Patentansprüche

1. Verfahren zur Definition verschiedener Eigenschaften von Schaumkörpern, die zellulosehaltige Stoffe enthalten, und verfahrensgemäß hergestellte Schaumkörper, wobei als Ausgangsbasis ein Brei aus Wasser, Altpapier und/oder Altpappe und/oder anderen aufgeschlossenen bzw. teilaufgeschlossenen zellulosehaltigen Stoffen dient, der später einer Wärmebehandlung, vorzugsweise mittels Mikrowellenstrahlung, unterzogen wird, dadurch gekennzeichnet, daß dem zellulosehaltigen Ausgangsmaterial Schäumungsmittel, Treibmittel, Stabilisierungsmittel und weitere nichtaufgeschlossene zellulosehaltige Materialien, wie auch silikatische Materialien, Rest- und Abfallstoffe, zugesetzt werden, daß die Zusätze gemeinsam oder alternativ zum Einsatz kommen, und daß die Zugabe verfahrensseitig zu jeweils bestimmten Zeitpunkten und in definierten Mengen gemäß den Unteransprüchen erfolgt.

2. Verfahren und Schaumkörper nach Anspruch 1, dadurch gekennzeichnet, daß das Ausgangsgemisch Zusatzstoffe in solcher Dosierung enthält daß sich das Gemisch wahlweise alkalisch, pH- neutral oder sauer verhält, wobei der pH- Wert im Bereich von 3 bis 12 liegen sollte.

3. Schaumkörper nach Anspruch 1, dadurch gekennzeichnet, daß mindestens ein Tensid als Schäumungsmittel enthalten ist, und zwar in einer Dosierung bis 5,0 Masse- %, bezogen auf das absolut trockene zellulosehaltige Ausgangsmaterial.

4. Schaumkörper nach Anspruch 1, dadurch gekennzeichnet, daß ein oder mehrere Treibmittel in einer Dosierung bis 200 Masse- %, bezogen auf das absolut trockene zellulosehaltige Ausgangsmaterial, enthalten sind, die entweder unter Wärmeeinfluß oder durch Vorhandensein eines weiteren Stoffes, beispielsweise Wasser, vollständig oder unter Bildung von Restprodukten in ein oder mehrere Gase zerfallen.

5. Schaumkörper nach Anspruch 1, dadurch gekennzeichnet,
daß ein oder mehrere Stabilisierungsmittel, die dem Schaumkörper eine definierte Festigkeit verleihen, in einer Dosierung bis 200 Masse- %, bezogen auf das absolut trockene zellulosehaltige Ausgangsmaterial, enthalten sind.

6. Schaumkörper nach Anspruch 5, dadurch gekennzeichnet, daß zur Herstellung eines Schaumkörpers mit hoher Festigkeit ein stark wirkendes Stabilisierungsmittel, während im Hinblick auf einen zu erzeugenden Schaumkörper mit hoher Porosität ein schwach wirkendes Stabilisierungsmittel Verwendung findet.

7. Schaumkörper nach Anspruch 1, dadurch gekennzeichnet, daß feinkörnig zerkleinerte silikatische Materialien in einer Dosierung bis 200 Masse- %,
bezogen auf das absolut trockene zellulosehaltige Ausgangsmaterial, in Abhängigkeit von der Festigkeit des herzustellenden Schaumkörpers enthalten sind.

8. Schaumkörper nach Anspruch 1, dadurch gekennzeichnet, daß die nichtaufgeschlossenen zellulosehaltigen Stoffe und die Rest- und Abfallstoffe zusammengenommen in einer Dosierung bis 200 Masse- %, bezogen auf das absolut trockene zellulosehaltige Ausgangsmaterial, enthalten sind.

9. Verfahren nach Anspruch 1, dadurch gekennzeichnet, daß die Zumischung von Schäumungsmitteln nach Anspruch 3 entweder gleichzeitig mit der Zugabe von Wasser für die Zellstoffquellung oder nach diesem Verfahrensschritt erfolgt.

10. Verfahren nach Anspruch 1, dadurch gekennzeichnet, daß die Zumischung von solchen Treibmitteln nach Anspruch 4, die ihre Wirkung ohne Wärmeeinfluß entfalten, unmittelbar vor dem Einfüllen des wasser- und zellulosehaltigen Breis in Formen erfolgt.

11. Verfahren nach Anspruch 1, dadurch gekennzeichnet, daß die Zumischung von Treibmitteln nach Anspruch 4, die unter Wärmeeinfluß wirken, gemeinsam mit dein Stabilisierungsmittel erfolgt.

12. Verfahren nach Anspruch 1, dadurch gekennzeichnet, daß das Stabilisierungsmittel während des Quellprozesses des zellulosehaltigen Ausgangsmaterials oder in einem nachfolgenden Mischprozeß hinzugefügt wird.

13. Verfahren nach den Ansprüchen 1 und 2, dadurch gekennzeichnet, daß die Zusatzmittel zur Beeinflussung des pH- Wertes bereits im zellulosehaltigen Ausgangsmaterial enthalten sind und durch das Verfahren zum Aufschluß bzw. Teilaufschluß dieses Materials aktiviert werden.

14. Verfahren nach den Ansprüchen 1 und 2, dadurch gekennzeichnet, daß die Zusatzmittel zur Beeinflussung des pH- Wertes während des Mischprozesses zu einem beliebigen Zeitpunkt zudosiert werden.

15. Verfahren nach den Ansprüchen 1 und 2, dadurch gekennzeichnet, daß die Zusatzmittel zur Beeinflussung des pH- Wertes in einer wässrigen Phase zunächst mit einem Bindemittel und einem Tensid angemischt, gegebenenfalls zu einem Schaum geschlagen, und daß anschließend die weiteren Einsatzstoffe zugemischt werden.

16. Verfahren nach Anspruch 1, dadurch gekennzeichnet, daß die Zudosierung des feinkörnig zerkleinerten silikatischen Materials, gemäß Anspruch 7, einhergehend mit einem intensiven Mischprozeß zu einem beliebigen Zeitpunkt vorgenommen wird.

17. Schaumkörper nach den Ansprüchen 1 und 7, dadurch gekennzeichnet, daß als silikatisches Material Fräsmehl aus der Produktion von Porenbeton zum Einsatz kommt.

18. Verfahren nach Anspruch 1, dadurch gekennzeichnet, daß die Zudosierung der nichtaufgeschlossenen zellulosehaltigen Stoffe und/oder der Rest- und Abfallstoffe in vorzerkleinerter Form mit bestimmter Korngröße bzw. Faserlänge mittels eines intensiven Mischprozeßes zu einem beliebigen Zeitpunkt vorgenommen wird.

19. Schaumkörper nach Anspruch 4, dadurch gekennzeichnet, daß als Treibmittel beispielsweise Hirschhornsalz, Backpulver, Natron oder Soda eingesetzt werden.

20. Schaumkörper nach Anspruch 5, dadurch gekennzeichnet, daß als Stabilisierungsmittel beispielsweise Latex, Gips, Anhydrit, Eiweiß, Stärke oder Mehl aus Körnerfrüchten verwendet werden.

21. Schaumkörper nach Anspruch 2, dadurch gekennzeichnet, daß als Zusatzmittel zur Beeinflussung des pH- Wertes beispielsweise Natron, Kalk, Kochsäure oder Salze der schwefligen Säure verwendet werden.

22. Schaumkörper nach Anspruch 8, dadurch gekennzeichnet, daß als nichtaufgeschlossene Naturprodukte wie Holz oder Schilf und solche aus der landwirtschaftlichen Produktion wie beispielsweise Stroh, Heu, Flachs oder Hanf Verwendung finden und daß als Rest- und Abfallstoffe Viskosefasern, Glas- oder Mineralfasern, Kunstfasern, Aktivkohle oder Schaumpolystyrol denkbar sind, wie auch prinzipiell alle anderen Materialien, die im Hinblick auf den vorgesehenen Einsatzzweck der zu erzeugenden Schaumkörper geeignet sind.

23. Schaumkörper nach Anspruch 1 mit guter Festigkeit, einer gewissen Elastizität und geringer Dichte, gekennzeichnet durch folgende Rezeptur:
| | |
|---|---|
| - zellulosehaltige Masse (trocken) | 34,5 % |
| - Tensid | 0,6 % |
| - Bindemittel (Eiweiß) | 28,7 % |
| - Bindemittel (Latex) | 31,6 % |
| - Treibmittel (Backpulver) | 4,6 % |

24. Schaumkörper nach Anspruch 1 mit geringer Festigkeit und geringer Dichte, gekennzeichnet durch folgende Rezeptur:
| | |
|---|---|
| - zellulosehaltige Masse (trocken) | 28,3 % |
| - Tensid | 0,8 % |
| - Bindemittel (Eiweiß) | 23,6 % |
| - Treibmittel (Natron) | 47,3 % |

25. Schaumkörper nach Anspruch 1, gekennzeichnet dadurch, daß nichtaufgeschlossenen zellulosehaltige Stoffe enthalten sind, mit folgender Rezeptur:
| | |
|---|---|
| - aufgeschlossene zellulosehaltige Masse (trocken) | 41,0 % |
| -nichtaufgeschlossene zellulosehaltige Masse (trocken) | 41,0 % |
| -Tensid | 1,1 % |
| -Bindemittel (Soja) | 8,3 % |
| - Treibmittel (Natron) | 8,6 % |

26. Schaumkörper nach Anspruch 1, in Verbindung mit den Ansprüchen 6, 15 und 16, gekennzeichnet durch folgende Rezeptur:
| | |
|---|---|
| - zellulosehaltige Masse (trocken) | 40,5 % |
| - Tensid | 2,4 % |
| - Bindemittel (Soja) | 11,9 % |
| - Treibmittel (Natron) | 4,7 % |
| - Porenbeton- Fräsmehl | 40,5 % |

27. Verfahren nach den Ansprüchen 1 und den relevanten Unteransprüchen, dadurch gekennzeichnet, daß Wasser nach Bedarf zugegeben wird, und zwar in einer solchen Menge, daß in der Ausgangsmischung 40- 90 % Wasser enthalten sind.
